# EUROPEAN PATENT SPECIFICATION

(11) **EP 2 127 325 B1**
(45) Date of publication and mention of the grant of the patent: **14.11.2012**
(21) Application number: 07822824.4
(22) Date of filing: 22.11.2007
(51) Int. Cl.: H04L 29/08, G06F 9/445

(54) **OPERATING SYSTEM DEPLOYMENT IN A PEER-TO-PEER COMPUTING ENVIRONMENT**
BETRIEBSSYSTEMEINSATZ IN EINER PEER-TO-PEER-DATENVERARBEITUNGSUMGEBUNG
DÉPLOIEMENT D'UN SYSTÈME D'EXPLOITATION DANS UN ENVIRONNEMENT INFORMATIQUE PAIR À PAIR

(30) Priority: 06.12.2006 US 567599
(43) Date of publication of application: 02.12.2009
(73) Proprietor: International Business Machines Corporation, Armonk, NY 10504 (US)
(72) Inventor: CHALEMIN, Glen Edmond, Austin, Texas 78726 (US); NAICK, Indran, Cedar Park, Texas 78613 (US); SPINAC, Clifford Jay, Hampshire SO21 2JN (GB); SZE, Calvin Lui, Austin, Texas 78732 (US)
(74) Representative: Litherland, David Peter
(86) International application number: PCT/EP2007/062704
(87) International publication number: WO 2008/068146

(56) References cited:
- EP-A- 0 689 325
- WO-A-02/29551
- GB-A- 2 328 046
- US-A1- 2005 144 493

## Description

### Technical Field of the Invention

The present invention relates to a system and method that deploys an operating system in a peer-to-peer network environment. More particularly, the present invention relates to a system and method that uses a hierarchy of client/servers that deploy the operating system to other clients in the peer-to-peer network.

### Background of the Invention

A peer-to-peer computer network is a network that relies primarily on the computing power and bandwidth of the participants in the network rather than concentrating it in a relatively low number of servers. Peer-to-peer networks are typically used for connecting nodes via largely ad hoc connections. Peer-to-peer networks are used for many purposes, such as sharing files containing audio, video, data or anything in digital format. In addition, peer-to-peer networks are used to pass real-time data, such as telephony traffic.

One advantage of peer-to-peer networks is that all clients provide resources, including bandwidth, storage space, and computing power. Thus, as nodes arrive and demand on the system increases, the total capacity of the system also increases. This is not true of a client-server architecture with a fixed set of servers, in which adding more clients could mean slower data transfer for all users. The distributed nature of peer-to-peer networks also increases robustness in case of failures by replicating data over multiple peers.

One type of peer-to-peer network are computers arranged in a "grid" environment. A grid environment is an emerging computing model that provides the ability to perform higher throughput computing by taking advantage of many networked computers to model a virtual computer architecture that is able to distribute process execution across a parallel infrastructure. Grids use the resources of many separate computers connected by a network, such as the Internet, to solve large-scale computations. Grids provide the ability to perform computations on large data sets, by breaking them down into many smaller ones, or provide the ability to perform many more computations at once than would be possible on a single computer, by modeling a parallel division of labor between processes.

A challenge in managing large peer-to-peer networks, such as those arranged in a grid environment, is deploying, and updating, the operating systems used by the individual computer systems that make up the peer-to-peer network. One approach is to manually install the operating systems onto the various computer systems. Because many computer systems can be involved, a manual operation of this sort is typically takes considerable time. Another approach is to clone one system's hard drive onto a number of other hard drives and then physically install the cloned drives into the other computer systems. A challenge with this approach is, again, the time needed to clone the hard drives and the need to physically install the cloned drives into the various systems (i.e., requiring physical access to the various computer systems included in the peer-to-peer network).

GB 2323046 describes a data processing network which comprises a plurality of client systems and a controlling server system operable to issue wake-up requests to the client systems to cause them to issue boot requests onto the network for servicing by a connected server system. The controlling system, which may be embodied in the server system or in a separate system issues the wake-up requests in accordance with a wake-up schedule calculated, for each client, to complete the boot process for that client before a target start-up time when that client user normally uses the client system.

US 2005/0144493 describes systems and arrangements for remotely selecting a bootable image via a WOL packet for a wake-on-LAN (WOL) capable computer are contemplated. Server-side embodiments include hardware and/or software for determining a client to be managed, determining whether the client is active on the network, and transmitting a WOL packet having a vector, or operating system partition identification (OSPID), to describe a bootable image accessible by the WOL capable computer. Some embodiments may include an OSPID that points to a secure bootable image such as a bootable image on a hard drive, a compact disk (CD) connected to the computer, or other local resource. Client-side embodiments may receive the WOL packet at, for instance, a network interface card (NIC), recognize that the WOL packet includes an OSPID that describes the bootable image to boot, and, implement an alternative boot sequence to boot from that bootable image.

### Summary of the Invention

It has been discovered that the aforementioned challenges are addressed using a computer implemented method according to claim 1, a computer network according to claim 6 and a computer program product according to claim 7.

### BRIEF DESCRIPTION OF THE DRAWINGS

Embodiments of the invention will next be described, by way of example only, with reference to the accompany drawings, in which:
**Figure 1** is a system diagram showing components used to deploy an operating system to multiple computer systems in a peer-to-peer network;
**Figure 2** is a depiction of a sample control file used to control deployment of the operating system to the computer systems in the network;
**Figure 3** is a depiction of a sample hierarchy of computer systems included in the peer-to-peer network where the operating system is deployed;
**Figure 4** is a flowchart showing the steps taken when a computer system boots in order to deploy the operating system;
**Figure 5** is a flowchart showing the steps performed when a computer system is performing the server routine;
**Figure 6** is a flowchart showing the steps taken in handling requests, including resetting the computer systems in order to ready the systems for installation of an updated operating system; and
**Figure 7** is a block diagram of a data processing system in which the methods described herein can be implemented.

### DETAILED DESCRIPTION

The following is intended to provide a detailed description of an example of the invention and should not be taken to be limiting of the invention itself. Rather, any number of variations may fall within the scope of the invention, which is defined in the claims following the description.

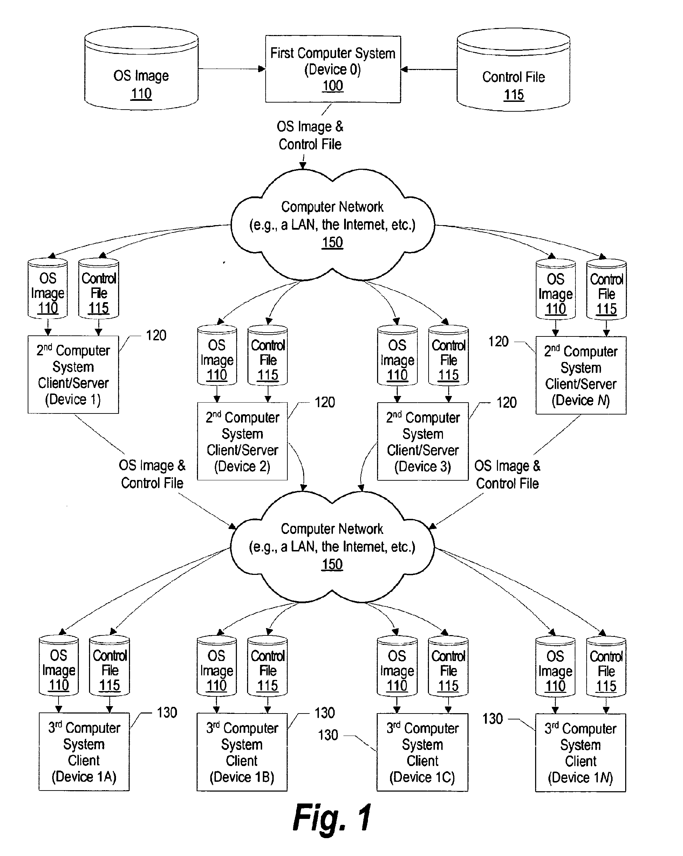

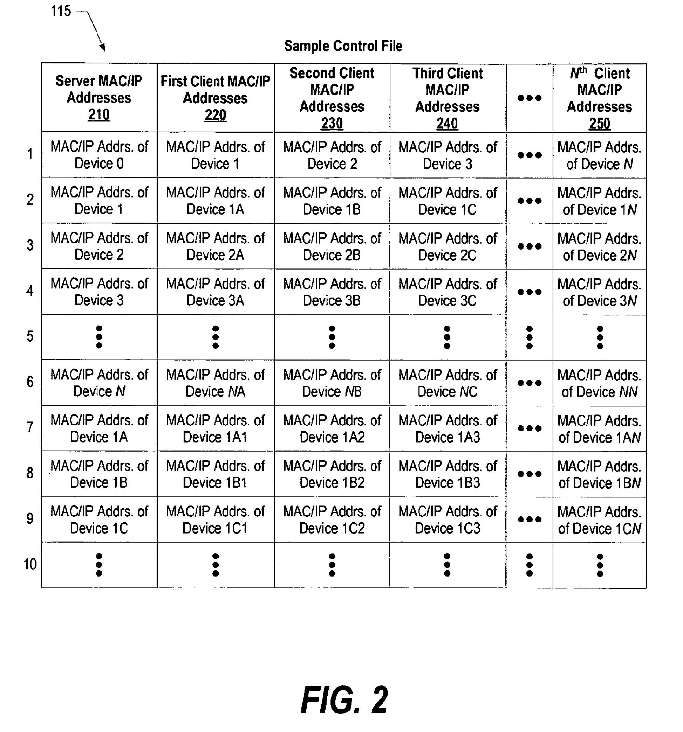

**Figure 1** is a system diagram showing components used to deploy an operating system to multiple computer systems in a peer-to-peer network. First computer system **100** (Device **0)** acts as a server for second computer systems **120** (Devices **1, 2, 3,** through *N*). In one embodiment, first computer system **100** identifies second computer systems **120** by reading control file **115.** Control file **115** identifies the various computer systems that act as servers as well as the clients that are served by the various servers. An example of control file **115** is shown in **Figure 2****.** In one embodiment, first computer system **100** transfers operating system image **110** to its clients (second computer systems **120)** in order to install the operating system onto the second computer systems. First computer system **100** sends a

Wake-on-LAN instruction to second computer systems **120** through computer network **150.** When second computer systems **120** wakeup (in response to receiving the Wake-on-LAN instruction), they broadcast a boot request over computer network **150.** First computer system **100** listens for the boot requests and, when the requests are detected, first computer system **100** boots the various second computer systems **120.** After the second computer systems are booted, they receive control file **115** from first computer system **100** via computer network **150.** In addition, in one embodiment, operating system image **110** is transmitted from first computer system **100** through computer network **150** to second computer systems **120.** The operating system images are then used to install the operating system on the various second computer systems so that, in the future, the second computer systems can be booted without having to boot the systems from the network.

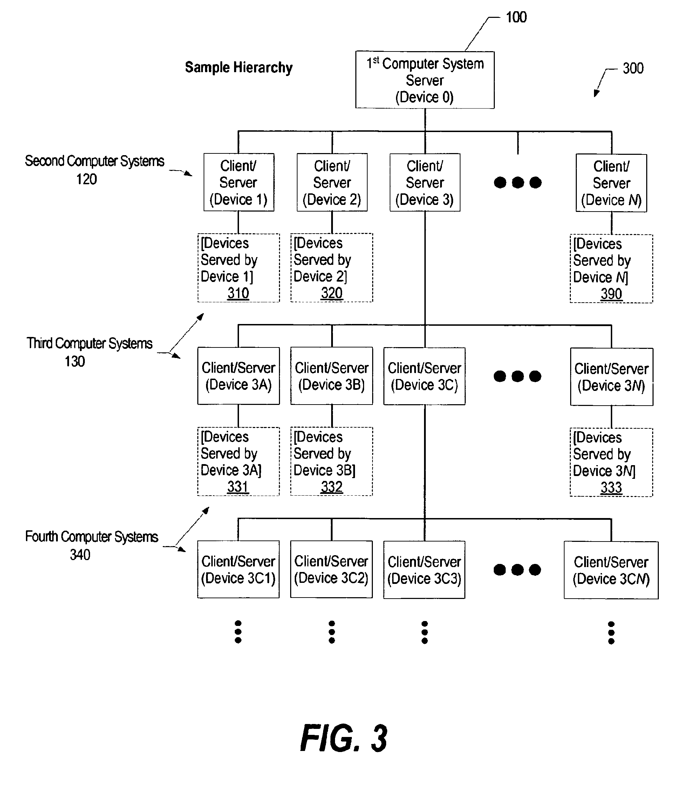

Second computer systems **120,** as shown, identify third computer systems **130** using control file **115.** The second computer systems are identified as clients of first computer system **100** and as servers of the various third computer systems **130.** The second computer systems act in a manner analogous to the first computer system described above. Second computer systems **120** identify their respective clients (third computer systems **130)** by reading control file **115.** In the example shown, the second computer system identified as "Device 1" acts as a server for third computer systems **130** (Devices **1A, 1B, 1C,** through **1*N*).** Likewise, the second computer system identified as "Device 2" would act as a server for third computer systems **130** (Devices **2A, 2B, 2C,** through **2*N*** which are not shown in **Figure 1** but appear in **Figures 2** and **3****).** "Device **3"** would act as a server for third computer systems **130** (Devices **3A, 3B, 3C,** through **3N** which are not shown in **Figure 1** but appear in **Figures 2** and 3). This would continue through to "Device ***N*"** which acts as a server for third computer systems **130** (Devices ***N*A*, N*B, *N*C,** through ***NN***)***.*** In the example shown, third computer systems **130** are shown as being the end nodes (i.e., not having their own clients), however, if control file **115** lists third computer systems **130** as having clients, they would perform Wake-on-LAN requests to fourth computer systems, boot the fourth computer systems, and transfer operating system image **110** and control file **115** to the individual computer systems (devices) that are included in the fourth computer systems.

Using the methodology described above, any number of computer system levels (e.g., fifth computer systems, sixth computer systems, etc.) can be employed. In this manner, the number of clients serviced by each server can be optimized based on the operating environment. Suppose, for example, that an optimal number of clients to be serviced by an individual server is ten. If the grid or peer-to-peer network has roughly one hundred computer systems, then three levels of computer systems would be used (first computer system **100,** second computer systems **120,** and third computer systems **130)** with the third computer systems being the end nodes. On the other hand, if the grid or peer-to-peer network has one thousand computer systems, then four levels of computer systems would be used (first computer system **100,** second computer systems **120,** third computer systems **130,** and fourth computer systems **340** (seen in **Figure 3****)** that would be clients of third computer systems **130.**

**Figure 2** is a depiction of a sample control file used to control deployment of the operating system to the computer systems in the network. Control file **115** identifies the various servers and the clients served by the servers. As can be seen, computer systems can be both a client and a server. Control file **115** has a number of fields. Field **210** identifies the unique identifier(s) of the computer systems that are used as servers. Examples of unique identifiers include a MAC address and an IP address.

Along with server identifier field **210** are several client identifier fields **220, 230, 240,** through **250.** Note that the devices that appear in the control file shown in **Figure 2** correspond to devices (e.g., computer systems) shown in both **Figures 1** and **3****.** For example, the first line of the control file in **Figure 2** identifies Device **0** as the first computer system which is the server for Devices **1** through Device ***N.*** The second line of the control file shown in **Figure 2** identifies Device **1** as one of the second computer systems that acts as a server for Devices **1A** through Device **1*N*.** Likewise, the third and fourth lines of the control file identify Devices **2** and **3,** respectively, as servers for client Devices **2A** through Device **2*N*** and client Devices **3A** through Device **3*N*,** respectively. Following the first row of ellipses, the last of the second computer systems (Device ***N)*** is shown as a server for client Devices ***N*A** through Device ***NN.***

The next row (row 7) shows a fourth set of computer systems being served by computer systems included in the third computer systems. Device **1A** (a third computer system) is shown serving Devices **1A1** through **1A*N*.** Row 8 shows Device **1B** serving Devices **1B1** though **1B*N***, and row 9 shows Device 1C serving Devices **1C1** though **1C*N*.** The ellipses in row 10 indicate that the definition of servers and clients continues until all servers and clients are identified.

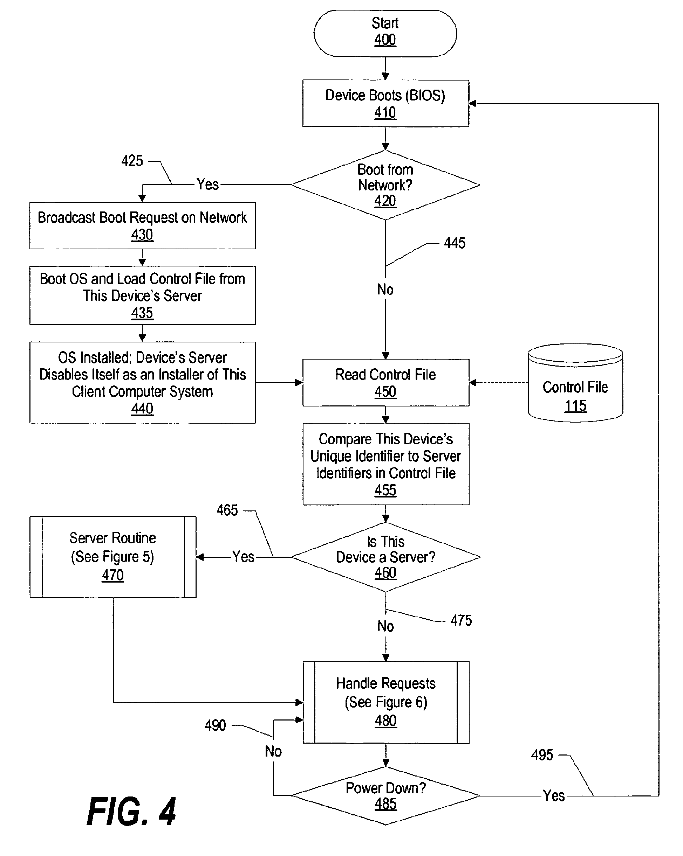

As will be further explained in **Figures 4-6****,** when a client is initialized, it is booted and a copy of control file **115** is loaded on the client computer system. The client then runs a routine that checks control file **115** to see if the computer system is also a server computer system. For example, when Device **1** initializes, it would read control file **115** and see that it (Device 1) is also listed as being a server by comparing its unique identifier to the unique identifier stored in server field **210.** In this example, Device 1 would read row 2 from control file **115** and proceed to wakeup and boot the client computer systems identified in row **2.**

**Figure 3** is a depiction of a sample hierarchy of computer systems included in the peer-to-peer network where the operating system is deployed. Hierarchy **300** includes first computer system **100,** second computer systems **120,** third computer systems **130** and fourth computer systems **340.** The relationship of servers and their clients is detailed in the sample control file shown in **Figure 2****.** First computer system **100** servers clients referred to as second computer systems **120** (Devices **1, 2, 3,** through Device ***N*).** Third computer systems **130** include devices served by second computer systems **120** (Devices **310** served by Device 1, Devices **320** served by Device **2,** Devices **390** served by Device *N,* and Device **3A, 3B, 3C** through 3N served by Device **3).** Fourth computer systems **340** include devices served by third computer systems **130** (including Devices **331,** Devices **332,** Device **3C1,** Device **3C2,** Device **3C3,** though Device **3C*N*** and Devices **333).**

**Figure 4** is a flowchart showing the steps taken when a computer system boots in order to deploy the operating system. Processing commences at **400** whereupon, at step **410** the computer system boots (e.g., by processing boot instructions stored in the system's BIOS). A determination is made as to whether the computer system is booting from the network (decision **420).** In one embodiment, this determination is made by reading a boot from network flag from a nonvolatile memory location (e.g., CMOS, etc.) during the BIOS boot routine.

If the computer system is booting from the network, then decision **420** branches to "yes" branch **425** whereupon, at step **430,** the computer system broadcasts a boot request across the computer network. The computer system's server responds and boots the computer system at step **435.** Also, during step **435,** control file **115** is loaded onto the computer system from the server. At step **440,** the operating system is installed by processing an operating system image received from the server. In addition, at step **440,** the device's server disables itself as an installer of this client computer system. Returning to decision **420,** if the device (computer system) is not booting from the network, then decision **420** branches to "no" branch **445** bypassing steps **430** through **440.**

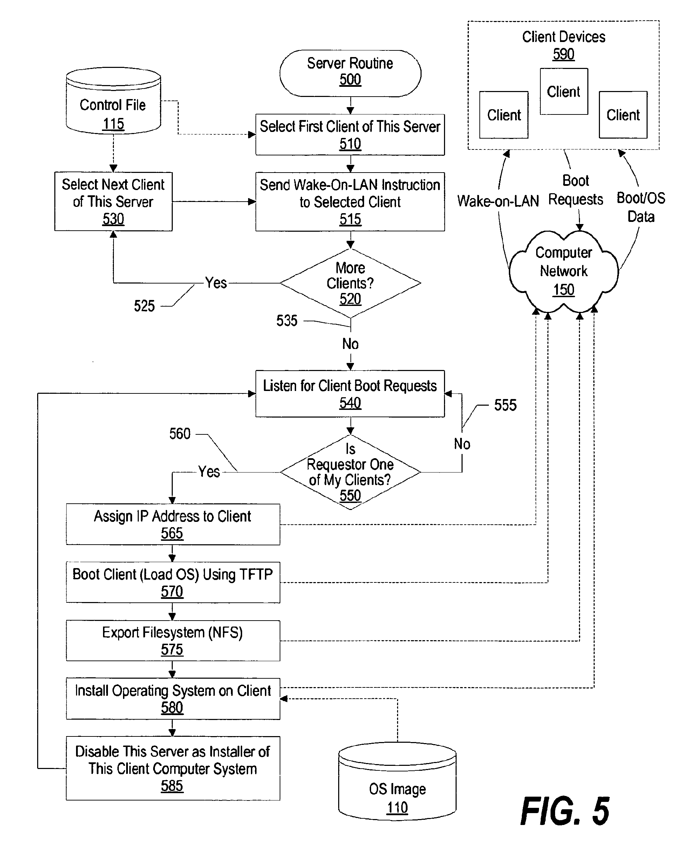

At step **450,** the computer system reads control file **115** (see **Figure 2** for an example control file). At step **455,** this device's unique identifier (e.g., MAC address, IP address, etc.) is compared to a set of server identifiers included in the control file. A determination is made, based on the comparison, as to whether this device is also a server for one or more other devices (decision **460).** If this device is a server, then decision **460** branches to "yes" branch **465** whereupon, at predefined process **470,** the device executes a server routine (see **Figure 5** and corresponding text for server processing details). On the other hand, if this device does not act as a server, then decision **460** branches to "no" branch **475** bypassing predefined process **470.**

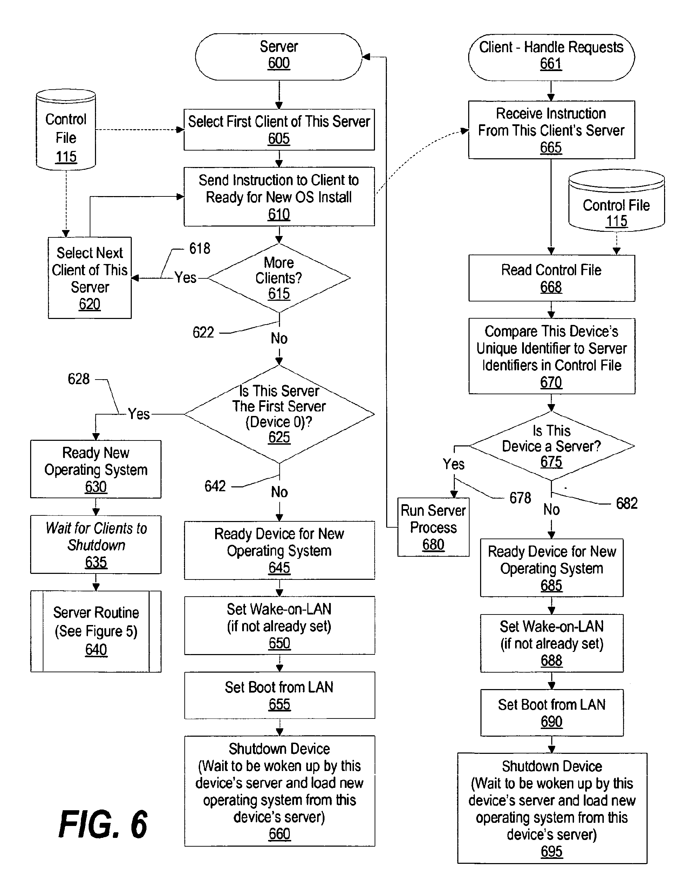

At predefined process **480,** the device handles various requests (see **Figure 6** and corresponding text for processing details). As can be seen in **Figure 6****,** one of the requests that can be handled is to "ready" the device for another boot request. A determination is made as to whether, based on the requests received, to power down the device (decision **485).** If the device is not powered down, decision **485** branches to "no" branch **490** and continues to handle requests. This continues until the device is powered down, at which point decision **485** branches to "yes" branch **495.** After the device is powered down, at some point it is booted (e.g., with a Wake-on-LAN command received from the device's server), at which point the steps shown in **Figure 4** are repeated.

**Figure 5** is a flowchart showing the steps performed when a computer system is performing the server routine. Processing commences at **500** whereupon, at step **510,** the server (e.g., first computer system **100)** selects the first client of this server listed in control file **115** (see **Figure 2** for an example of a control file). At step **515,** the server sends a Wake-on-LAN instruction to the selected client. A determination is made by reading control file **115** as to whether the server has more clients to process (decision **520).** If the server has more clients, then decision **520** branches to "yes" branch **525** whereupon, at step **530,** the next client for this server is selected and processing loops back to send the Wake-on-LAN instruction to the newly selected client. This looping continues until all clients for this server have been sent the Wake-on-LAN instruction, at which point decision **520** branches to "no" branch **535.**

At step **540,** the server listens for client boot requests. When the client computer systems were woken up using the Wake-on-LAN instruction, they powered on and booted using the BIOS stored in the client computer systems which instructed the client computer systems to boot from the network (LAN). As shown in **Figure 4****,** the client computer systems broadcast a boot request on the network (step **430)** and, in **Figure 5****,** the servers listen for the boot requests. Control file **115** lists many servers that serve different client computer systems. Because many servers are operating at the same time, when a client boot request is received at step **540,** the client's unique identifier is compared to the server's client identifiers and a determination is made as to whether the client that is making the boot request is one of this server's clients (decision **550).** If the client making the boot request is not one of this server's clients, then decision **550** branches to "no" branch **555** which loops back to continue listening for client boot requests. On the other hand, if the client making the boot request is one of this server's clients, then decision **550** branches to "yes" branch **560.** At step **565,** the server assigns an IP address to the client computer system. At step **570,** the server boots the client using TFTP. In one embodiment, such as in a Linux environment, a filesystem is exported to the client computer system at step **575.** At step **580,** the operating system is installed on the client computer system using operating system image **110.** Finally, at step **585,** the server is disabled as the installer of the client computer system. As shown, the assignment of the IP address, the boot requests, and the boot and/or operating system data are transmitted between the server computer system and client computer systems **590** via computer network **150.**

In one embodiment, the client computer system clears the boot from network flag so that, when the client computer system is re-booted, the client computer system boots using the operating system installed on the client computer system rather than booting from the network. When a new operating system or a new version of the operating system is being deployed, the client computer system is readied for the deployment using the steps shown in **Figure 6****.**

**Figure 6** is a flowchart showing the steps taken in handling requests, including resetting the computer systems in order to ready the systems for installation of an updated operating system. When a new operating system (or a new version of an operating system) needs to be deployed, server processing is initiated at **600** (e.g., at first computer system **100).** At step **605,** the first server (e.g., first computer system **100)** selects the first client for the server from control file **115.** At step **610,** the server sends the selected client an instruction to ready the client for a new operating system deployment. A determination is made, based on the data in control file **115,** as to whether there are more clients of this server (decision **615).** If there are more clients of this server, then decision **615** branches to "yes" branch **618** whereupon, at step **620,** the next client of this server is selected from control file **115** and processing loops back to send the newly selected client the instruction to ready itself for a new operating system deployment. This looping continues until all clients of this server have been sent the instruction to ready for the new operating system deployment, at which point decision **615** branches to "no" branch **622.**

A determination is made as to whether this server is the first server (e.g., first computer system **100,** also referred to as Device **0)** in the peer-to-peer network or grid (decision **626).** If this is the first server, then decision **625** branches to "yes" branch **628** whereupon, at step **630,** the first server (first computer system **100)** is readied for the new operating system deployment (e.g., by automatically or manually installing the operating system on first computer system **100).** At step **635,** the first server waits for the clients in the peer-to-peer network to shutdown. Once the clients have been shutdown (i.e., with Wake-on-LAN enabled), the first server runs predefined process **640** which executes the server routine that deploys the operating system (see **Figure 5** and corresponding text for processing details).

Returning to decision **625.** if this server is not the first server (e.g., this computer system is one of the second computer systems, etc.), then decision **625** branches to "no" branch **642** whereupon, at step **645,** the computer system is readied for the new operating system. This includes setting the device's Wake-on-LAN flag (step **650)** so that the device can be woken up by the device's server and, at step **655,** setting the device's boot from network flag so that the device will boot from the network rather than booting from an operating system previously installed on the device. At step **660,** the device is shutdown. At this point, the device waits to be woken up by the device's server as identified in control file **115.**

Turning now to the client's handling of ready instructions, processing commences at **661** whereupon, at step **665,** the client receives a ready instruction from the client's server. At step **668,** the client reads control file **115** and, at step **670,** the client compares its unique identifier (e.g., MAC address, IP address, etc.) to the server identifiers listed in control file **115.** A determination is made as to whether this client device is also a server to other devices (decision **675).** If this device is also a server to other devices, then decision **675** branches to "yes" branch **678** whereupon, at step **680,** the server process is executed (steps **600** through **660).** On the other hand, if this device does not act as a server to other devices, then decision **675** branches to "no" branch **682,** whereupon, at step **685,** the computer system is readied for the new operating system. This includes setting the device's Wake-on-LAN flag (step **688)** so that the device can be woken up by the device's server and, at step **690,** setting the device's boot from network flag so that the device will boot from the network rather than booting from an operating system previously installed on the device. At step **695,** the device is shutdown. At this point, the device waits to be woken up by the device's server as identified in control file **115.**

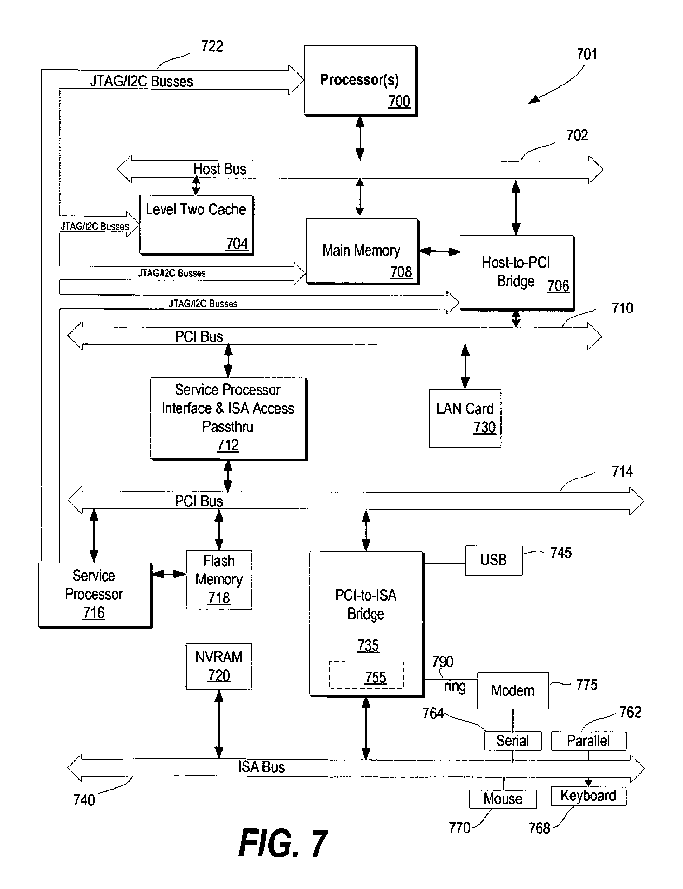

**Figure 7** illustrates information handling system **701** which is a simplified example of a computer system capable of performing the computing operations described herein. Computer system **701** includes processor **700** which is coupled to host bus **702.** Time-day card **799** and a level two (L2) cache memory **704** is also coupled to host bus **702.** Host-to-PCI bridge **706** is coupled to main memory **708,** includes cache memory and main memory control functions, and provides bus control to handle transfers among PCI bus **710,** processor **700,** L2 cache **704,** main memory **708,** and host bus **702.** Main memory **708** is coupled to Host-to-PCI bridge **706** as well as host bus **702.** Devices used solely by host processor(s) **700,** such as LAN card **730,** are coupled to PCI bus **710.** Service Processor Interface and ISA Access Pass-through **712** provides an interface between PCI bus **710** and PCI bus **714.** In this manner, PCI bus **714** is insulated from PCI bus **710.** Devices, such as flash memory **718,** are coupled to PCI bus **714.** In one implementation, flash memory **718** includes BIOS code that incorporates the necessary processor executable code for a variety of low-level system functions and system boot functions.

PCI bus **714** provides an interface for a variety of devices that are shared by host processor(s) **700** and Service Processor **716** including, for example, flash memory **718.** PCI-to-ISA bridge **735** provides bus control to handle transfers between PCI bus **714** and ISA bus **740,** universal serial bus (USB) functionality **745,** power management functionality **755**, and can include other functional elements not shown, such as a real-time clock (RTC), DMA control, interrupt support, and system management bus support. Nonvolatile RAM **720** is attached to ISA Bus **740.** Service Processor **716** includes JTAG and I2C busses **722** for communication with processor(s) **700** during initialization steps. JTAG/I2C busses **722** are also coupled to L2 cache **704,** Host-to-PCI bridge **706,** and main memory **708** providing a communications path between the processor, the Service Processor, the L2 cache, the Host-to-PCI bridge, and the main memory. Service Processor **716** also has access to system power resources for powering down information handling device **701.**

Peripheral devices and input/output (I/O) devices can be attached to various interfaces (e.g., parallel interface **762,** serial interface **764,** keyboard interface **768,** and mouse interface **770** coupled to ISA bus **740.** Alternatively, many I/O devices can be accommodated by a super I/O controller (not shown) attached to ISA bus **740.**

In order to attach computer system **701** to another computer system to copy files over a network, LAN card **730** is coupled to PCI bus **710.** Similarly, to connect computer system **701** to an ISP to connect to the Internet using a telephone line connection, modem **775** is connected to serial port **764** and PCI-to-ISA Bridge **735.**

While **Figure 7** shows one information handling system, an information handling system may take many forms. For example, an information handling system may take the form of a desktop, server, portable, laptop, notebook, or other form factor computer or data processing system. In addition, an information handling system may take other form factors such as a personal digital assistant (PDA), a gaming device, ATM machine, a portable telephone device, a communication device or other devices that include a processor and memory.

One of the preferred implementations of the invention is a client application, namely, a set of instructions (program code) or other functional descriptive material in a code module that may, for example, be resident in the random access memory of the computer. Until required by the computer, the set of instructions may be stored in another computer memory, for example, in a hard disk drive, or in a removable memory such as an optical disk (for eventual use in a CD ROM) or floppy disk (for eventual use in a floppy disk drive), or downloaded via the Internet or other computer network. Thus, the present invention may be implemented as a computer program product for use in a computer. In addition, although the various methods described are conveniently implemented in a general purpose computer selectively activated or reconfigured by software, one of ordinary skill in the art would also recognize that such methods may be carried out in hardware, in firmware, or in more specialized apparatus constructed to perform the required method steps. Functional descriptive material is information that imparts functionality to a machine. Functional descriptive material includes, but is not limited to, computer programs, instructions, rules, facts, definitions of computable functions, objects, and data structures.

While particular embodiments of the present invention have been shown and described, it will be obvious to those skilled in the art that, based upon the teachings herein, that changes and modifications may be made without departing from this invention and its broader aspects. Therefore, the appended claims are to encompass within their scope all such changes and modifications as are within the true scope of this invention. Furthermore, it is to be understood that the invention is solely defined by the appended claims. It will be understood by those with skill in the art that if a specific number of an introduced claim element is intended, such intent will be explicitly recited in the claim, and in the absence of such recitation no such limitation is present. For non-limiting example, as an aid to understanding, the following appended claims contain usage of the introductory phrases "at least one" and "one or more" to introduce claim elements. However, the use of such phrases should not be construed to imply that the introduction of a claim element by the indefinite articles "a" or "an" limits any particular claim containing such introduced claim element to inventions containing only one such element, even when the same claim includes the introductory phrases "one or more" or "at least one" and indefinite articles such as "a" or "an"; the same holds true for the use in the claims of definite articles.

## Claims

1. A computer-implemented method of deploying an operating system in a computer network including a plurality of computer systems, the method comprising the steps of:
identifying, at a first computer system (100) selected from the plurality of computer systems, a plurality of second computer system identifiers (220) corresponding to a plurality of second computer systems also included in the plurality of computer systems;
sending (515), via the computer network, a Wake-on-LAN instruction from the first computer system to each of the second computer systems using the second computer system identifiers;
booting (570), over the computer network, the second computer systems from the first computer system;
transferring an operating system image from the first computer system to each of the booted second computer systems, the operating system image corresponding to an operating system, and installing the operating system onto each of the second computer systems using the transferred operating system images; **characterised by** the further steps of :
transferring, via the computer network, a control file from the first computer system to the booted second computer systems, wherein the control file lists a plurality of third computer system identifiers corresponding to each of the second computer identifiers;
identifying, at a plurality of selected second computer systems, the plurality of third computer identifiers that corresponds to each of the selected second computer systems by, at each of the second computer systems:
reading the control file; and
selecting the plurality of third computer system identifiers that correspond to the identifier of the second computer system;
sending, via the computer network, the Wake-on-LAN instruction from the selected second computer systems to each of the third computer systems using the third computer system identifiers;
booting, over the computer network, the third computer systems from the selected second computer systems;
transferring the operating system image from each of the selected second computer systems to each of the corresponding booted third computer systems, and installing the operating system onto each of the third computer systems using the transferred operating system images.

2. The method of claim 1, wherein the booting of the second computer systems further comprises:
receiving, at the first computer system, a boot request over the computer network from
a plurality of requestors, the boot request including a requestor identifier; and comparing the received requestor identifier to the plurality of second computer system identifiers, wherein the booting is performed in response to the requestor identifier matching one of the second computer system identifiers.

3. The method of claim 1 further comprising:
at each of the second computer systems receiving boot requests being transmitted over the computer network from a plurality of requestors, wherein each of the boot requests includes a request identifier; and
comparing the received requestor identifiers to the plurality of third computer system identifiers included in the control file, wherein the booting is performed in response one of the requestor identifiers matching one of the third computer system identifiers and in response to the third computer system identifier corresponding to the second computer system identifier in the control file.

4. The method of claim 1 further comprising:
before sending the Wake-on-LAN instructions to the second computer systems, readying the second and third computer systems, the readying including:
at each of the plurality of computer systems, wherein each of the computer systems including a unique identifier:
receiving a ready instruction at the computer system;
reading a control file that identifies a plurality of server computer identifiers and a plurality of client computer identifiers;
comparing the server computer identifiers with the computer system's unique identifier;
sending the ready instruction to one or more client computer systems corresponding to one or more of the plurality of client computer identifiers in response to the computer system's unique identifier matching one of the server computer identifiers;
setting a Wake-on-LAN flag in the computer system;
setting a boot from LAN flag in the computer system; and
shutting down the computer system.

5. The method of claim 1 further comprising:
the identifying of the plurality of second computer system identifiers including reading a control file at the first computer system, wherein the control file lists the plurality of second computer system identifiers corresponding to the first computer identifier and further lists the plurality of third computer system identifiers corresponding to each of the second computer identifiers;
transferring the control file from the first computer system to each of the second computer systems; and
transferring the control file from the second computer systems to each of the third computer systems.

6. A computer network comprising:
a plurality of computer systems, each comprising one or more processors;
memory accessible by at least one of the processors of each computer system;
a nonvolatile storage area accessible by at least one of the processors of each computer system;
network interface adapters connecting the computer systems to a computer network; and
a set of instructions stored in memory, wherein one or more of the processors executes the set of instructions for deploying an operating system in the plurality of computer systems, the executed instructions performing the steps of any of claims 1 to 5.

7. A computer program product stored in a computer readable medium, comprising functional descriptive material that, when executed by a data processing system, causes the data processing system to perform the steps as claimed in any of claims 1 to 5, to deploy an operating system on a plurality of computer systems interconnected with a computer network.

## Patentansprüche

1. Computerrealisiertes Verfahren für den Einsatz eines Betriebssystems in einem Computernetzwerk, das eine Vielzahl von Computersystemen beinhaltet, wobei das Verfahren die folgenden Schritte umfasst:
Erkennen in einem ersten Computersystem (100), das aus der Vielzahl von Computersystemen ausgewählt wird, einer Vielzahl von zweiten Computersystem-Bezeichnern (220), die einer Vielzahl von zweiten Computersystemen entsprechen, welche ebenfalls in der Vielzahl von Computersystemen enthalten sind;
Senden (515) eines Wake-on-LAN-Befehls von dem ersten Computersystem an jedes der zweiten Computersysteme unter Verwendung der zweiten Computersystem-Bezeichner über das Computernetzwerk;
Booten (570) der zweiten Computersysteme von dem ersten Computersystem über das Computernetzwerk;
Übertragen eines Betriebssystemabbilds von dem ersten Computersystem an jedes der gebooteten zweiten Computersysteme, wobei das Computersystemabbild einem Betriebssystem entspricht, und Installieren des Betriebssystems auf jedem der zweiten Computersysteme unter Verwendung der übertragenen Betriebssystemabbilder;
**gekennzeichnet durch** die weiteren Schritte des:
Übertragens einer Steuerungsdatei von dem ersten Computersystem an die gebooteten zweiten Computersysteme über das Computernetzwerk, wobei die Steuerungsdatei eine Vielzahl von dritten Computersystem-Bezeichnern auflistet, die jedem der zweiten Computer-Bezeichner entsprechen;
Erkennens der Vielzahl von dritten Computer-Bezeichnern, die jedem der ausgewählten zweiten Computersysteme entsprechen, in einer Vielzahl von ausgewählten zweiten Computersystemen indem in jedem der zweiten Computersysteme:
die Steuerungsdatei gelesen wird; und
die Vielzahl von dritten Computersystem-Bezeichnern, die dem Bezeichner des zweiten Computersystems entsprechen, ausgewählt wird;
Sendens des Wake-on-LAN-Befehls über das Computernetzwerk von den ausgewählten zweiten Computersystemen an jedes der dritten Computersysteme, wobei die dritten Computersystem-Bezeichner verwendet werden;
Bootens der dritten Computersysteme von den ausgewählten zweiten Computersystemen über das Computernetzwerk;
Übertragens des Betriebssystemabbilds von jedem der ausgewählten zweiten Computersysteme an jedes der entsprechenden gebooteten dritten Computersysteme und
Installierens des Betriebssystems auf jedem der dritten Computersysteme unter Verwendung der übertragenen Betriebssystemabbilder.

2. Verfahren nach Anspruch 1, wobei das Booten der zweiten Computersysteme des Weiteren Folgendes umfasst:
Empfangen einer Boot-Anforderung von einer Vielzahl von Anforderern über das Netzwerk in dem ersten Computersystem, wobei die Boot-Anforderung einen Anforderer-Bezeichner beinhaltet; und
Vergleichen des empfangenen Anforderer-Bezeichners mit der Vielzahl von zweiten Computersystem-Bezeichnern, wobei das Booten als Reaktion darauf durchgeführt wird, dass der Anforderer-Bezeichner mit einem der zweiten Computersystem-Bezeichner übereinstimmt.

3. Verfahren nach Anspruch 1, das des Weiteren Folgendes umfasst:
Empfangen von Boot-Anforderungen, die über das Computernetzwerk von einer Vielzahl von Anforderern übertragen werden, in jedem der zweiten Computersysteme, wobei jede der Boot-Anforderungen einen Anforderungs-Bezeichner beinhaltet; und
Vergleichen der empfangenen Anforderer-Bezeichner mit der Vielzahl von dritten in der Steuerungsdatei enthaltenen Computersystem-Bezeichnern, wobei das Booten als Reaktion darauf, dass einer der Anforderer-Bezeichner mit einem der dritten Computersystem-Bezeichner übereinstimmt und als Reaktion darauf, dass der dritte Computersystem-Bezeichner mit dem zweiten Computersystem-Bezeichner in der Steuerungsdatei übereinstimmt, durchgeführt wird.

4. Verfahren nach Anspruch 1, das des Weiteren Folgendes umfasst:
vor dem Senden der Wake-on-LAN-Befehle an die zweiten Computersysteme Bereitmachen der zweiten und dritten Computersysteme, wobei das Bereitmachen beinhaltet:
in jedem aus der Vielzahl von Computersystemen, wobei jedes der Computersysteme einen eindeutigen Bezeichner beinhaltet:
Empfangen eines Bereit-Befehls in dem Computersystem;
Lesen einer Steuerungsdatei, die eine Vielzahl von Server-Computer-Bezeichnern und eine Vielzahl von Client-Computer-Bezeichnern kenntlich macht;
Vergleichen der Server-Computer-Bezeichner mit dem eindeutigen Bezeichner des Computersystems;
Senden der Bereit-Befehle an einen oder mehrere Client-Computer-Systeme, die einem oder mehreren aus der Vielzahl von Client-Computer-Bezeichnern entsprechen, als Reaktion darauf, dass der eindeutige Bezeichner des Computersystems mit einem der Server-Computer-Bezeichner übereinstimmt;
Setzen einer Wake-on-LAN-Markierung in dem Computersystem;
Setzen einer Boot-from-LAN-Markierung in dem Computersystem; und
Herunterfahren des Computersystems.

5. Verfahren nach Anspruch 1, das ferner Folgendes umfasst:
Erkennen der Vielzahl von zweiten Computersystem-Bezeichnern einschließlich des Lesens einer Steuerungsdatei in dem ersten Computersystem, wobei die Steuerungsdatei die Vielzahl von zweiten Computersystem-Bezeichnern auflistet, die dem ersten Computer-Bezeichner entsprechen, und ferner die Vielzahl von dritten Computersystem-Bezeichnern auflistet, die jedem der zweiten Computer-Bezeichner entsprechen;
Übertragen der Steuerungsdatei von dem ersten Computersystem an jedes der zweiten Computersysteme; und
Übertragen der Steuerungsdatei von den zweiten Computersystemen an jedes der dritten Computersysteme.

6. Computernetzwerk, das Folgendes umfasst:
eine Vielzahl von Computersystemen, von denen jedes einen oder mehrere Prozessoren umfasst;
ein Speicher, auf den von mindestens einem der Prozessoren jedes Computersystems zugegriffen werden kann;
ein Bereich nichtflüchtiger Speicher, auf den von mindestens einem der Prozessoren jedes Computersystems zugegriffen werden kann;
Netzwerkschnittstellen-Adapter, welche die Computersysteme mit einem Computernetzwerk verbinden; und
einen Satz von Befehlen, die in dem Speicher gespeichert sind, wobei einer oder mehrere der Prozessoren den Satz von Befehlen ausführt, um auf der Vielzahl von Computersystemen ein Betriebssystem einzusetzen, wobei die ausgeführten Befehle die Schritte eines beliebigen der Ansprüche 1 bis 5 durchführen.

7. Computerprogrammprodukt, das auf einem computerlesbaren Medium gespeichert ist, welches wirkungsrelevantes Material umfasst, das, wenn es durch ein Datenverarbeitungssystem ausgeführt wird, das Datenverarbeitungssystem dazu veranlasst, die Schritte nach einem beliebigen der Ansprüche 1 bis 5 durchzuführen, um ein Betriebssystem auf einer Vielzahl von Computersystemen einzusetzen, die mit einem Computernetzwerk verbunden sind.

## Revendications

1. Procédé exécuté par ordinateur, pour le déploiement d'un système d'exploitation dans un réseau informatique, incluant une pluralité de systèmes informatiques, le procédé comprenant les étapes suivantes :
identification, dans un premier système informatique (100) sélectionné parmi une pluralité de systèmes informatiques, d'une pluralité d'identifiants de deuxième système informatique (220), correspondant à une pluralité de deuxièmes systèmes informatiques également inclus dans la pluralité de systèmes informatiques;
envoi (515), par le biais du réseau informatique, d'une instruction de réveil par le réseau local, venant du premier système informatique, à chacun des deuxièmes systèmes informatiques, à l'aide des identifiants de deuxième système informatique;
démarrage (570), par le réseau informatique, des deuxièmes systèmes informatiques, depuis le premier système informatique;
transfert d'une image de système d'exploitation, du premier système informatique à chacun des deuxièmes systèmes informatiques démarrés, où l'image de système d'exploitation correspond à un système d'exploitation, et installation du système d'exploitation sur chacun des deuxièmes systèmes informatiques, à l'aide des images de système d'exploitation transférées ;
**caractérisé par** les étapes supplémentaires suivantes :
transfert, par le biais du réseau informatique, d'un fichier de contrôle, du premier système informatique aux deuxièmes systèmes informatiques démarrés, où le fichier de contrôle énumère une pluralité d'identifiants de troisièmes systèmes informatiques, correspondant à chacun des identifiants de deuxièmes systèmes informatiques ;
identification, dans une pluralité de deuxièmes systèmes informatiques sélectionnés, de la pluralité d'identifiants de troisièmes systèmes informatiques, correspondant à chacun des deuxièmes systèmes informatiques sélectionnés, en exécutant les actions suivantes dans chacun des deuxièmes systèmes informatiques :
la lecture du fichier de contrôle ; et
la sélection de la pluralité d'identifiants de troisièmes systèmes informatiques correspondant à l'identifiant du deuxième système informatique;
envoi, par le biais du réseau informatique, de l'instruction de réveil par le réseau local, venant des deuxièmes systèmes informatiques sélectionnés, à chacun des troisièmes systèmes informatiques, à l'aide des identifiants de troisième système informatique;
démarrage, par le réseau informatique, des troisièmes systèmes informatiques, depuis le deuxième système informatique sélectionné ;
transfert d'une image de système d'exploitation, de chacun des deuxièmes systèmes informatiques sélectionnés, à chacun des troisièmes systèmes informatiques démarrés correspondants, et installation du système d'exploitation sur chacun des troisièmes systèmes informatiques, à l'aide des images de système d'exploitation transférées.

2. Procédé selon la revendication 1, dans lequel le démarrage des deuxièmes systèmes informatiques comprend en outre :
la réception, par le premier système informatique, d'une demande de démarrage, par le biais du réseau informatique, venant d'une pluralité de demandeurs, la demande de démarrage incluant un identifiant de demandeur ; et
la comparaison de l'identifiant de demandeur reçu avec la pluralité d'identifiants de deuxièmes systèmes informatiques, où le démarrage est effectué en réponse à l'identifiant de demandeur correspondant à l'une des identifiants de deuxième système informatique.

3. Procédé selon la revendication 1, comprenant en outre :
la réception, par chacun des deuxièmes systèmes informatiques, des demandes de démarrage transmises par le réseau informatique à partir d'une pluralité de demandeurs, chacune des demandes de démarrage incluant un identifiant de demande ; et
la comparaison des identifiants de demandeur reçus avec la pluralité d'identifiants de troisièmes systèmes informatiques inclus dans le fichier de contrôle, le démarrage étant effectué en réponse à l'un des identifiants de demandeur correspondant à l'un des identifiants de troisième système informatique et en réponse à l'identifiant de troisième système informatique correspondant à l'identifiant de deuxième système informatique dans le fichier de contrôle.

4. Procédé selon la revendication 1, comprenant en outre :
la préparation des deuxièmes et troisièmes systèmes informatiques, avant l'envoi des instructions de réveil par le réseau local aux deuxièmes systèmes informatiques, la préparation incluant :
pour chacun de la pluralité de systèmes informatiques, où chacun des systèmes informatiques inclut un identifiant unique :
la réception d'une instruction de préparation par le système informatique;
la lecture d'un fichier de contrôle indiquant une pluralité d'identifiants d'ordinateurs serveurs et une pluralité d'identifiants d'ordinateurs clients;
la comparaison des identifiants d'ordinateurs serveurs avec l'identifiant unique de système informatique;
l'envoi de l'instruction de préparation à un ou plusieurs systèmes informatiques clients correspondant à un ou plusieurs de la pluralité d'identifiants d'ordinateur client, en réponse à l'identifiant unique de système informatique correspondant à l'un des identifiants d'ordinateur serveur ;
le réglage d'un drapeau de réveil par le réseau local, dans le système informatique;
le réglage d'un drapeau de démarrage à partir du réseau local dans le système informatique; et
l'arrêt du système informatique.

5. Procédé selon la revendication 1, comprenant en outre :
l'identification de la pluralité d'identifiants de deuxièmes systèmes informatiques, y compris la lecture d'un fichier de contrôle dans le premier système informatique, où le fichier de contrôle énumère la pluralité d'identifiants de deuxièmes systèmes informatiques correspondant à l'identifiant de premier système informatique, et énumère également la pluralité d'identifiants de troisièmes systèmes informatiques correspondant à chacun des identifiants de deuxièmes systèmes informatiques;
le transfert du fichier de contrôle, depuis le premier système informatique, à chacun des deuxièmes systèmes informatiques; et
le transfert du fichier de contrôle, depuis les deuxièmes systèmes informatiques, à chacun des troisièmes systèmes informatiques.

6. Réseau informatique comprenant :
une pluralité de systèmes informatiques, chacun d'eux comprenant un ou plusieurs processeurs ;
une mémoire accessible par au moins l'un des processeurs de chaque système informatique;
une zone de stockage non-volatile, accessible par au moins l'un des processeurs de chaque système informatique;
des adaptateurs d'interface réseau, connectant les systèmes informatiques à un réseau informatique;
une série d'instructions stockées dans la mémoire, où l'un ou plusieurs des processeurs exécute la série d'instructions, pour déployer un système d'exploitation dans la pluralité de systèmes informatiques, les instructions exécutées mettant en oeuvre les étapes de l'une quelconque des revendications 1 à 5.

7. Produit de programme informatique stocké dans un support lisible par ordinateur, comprenant du matériel descriptif fonctionnel, qui, lorsqu'il est exécuté par un système de traitement de données, amène le système de traitement de données à exécuter les étapes selon l'une quelconque des revendications 1 à 5, pour déployer un système d'exploitation dans une pluralité de systèmes informatiques reliés à un réseau informatique.
